# EUROPEAN PATENT APPLICATION

(11) **EP 1 217 507 A2**
(43) Date of publication of application: **26.06.2002**
(21) Application number: 01310618.2
(22) Date of filing: 19.12.2001
(51) Int. Cl.: G06F 3/033

(54) **Graphical display adjusting system**

(30) Priority: 21.12.2000 JP 2000389108; 02.02.2001 JP 2001026371
(71) Applicant: Seiko Instruments Inc., Chiba-shi, Chiba (JP)
(72) Inventor: Nakatani, Rinataro, Mihama-ku, Chiba-shi, Chiba (JP)
(74) Representative: Sturt, Clifford Mark

(57) **Abstract**

The graphical display adjusting system of the present invention comprises: a function of selecting types of data by specifying a display area of an axis on a screen; a function whereby when the selected axis is moved on the screen, while being dragged, a graph of the corresponding data is scrolled with the movement thereof, and a function whereby when a wheel of a mouse is rotated in one direction, with the axis being specified, the corresponding data is displayed in an enlarged scale and when the wheel is rotated in the reverse direction, the corresponding data is displayed in a reduced scale.

## Description

The present invention relates to a graphical display adjusting system for adjusting a graphic image so as to be able to change the scale for each type of data, at the time of graphically displaying a plurality of data corresponding to a certain variable stored in a computer. More specifically, the present invention relates to a graphical display adjusting system suitable for an analysis apparatus.

Heretofore, it has been common practice, not only for physical analysis and chemical analysis but also for economic trend analysis and various performance trend understanding, that a plurality of data corresponding to a certain variable stored in the computer is graphically displayed, for example, with the variable plotted on the horizontal axis (X axis) and data plotted on the vertical axis (Y axis) . In thermal analysis, which is one field of physical analysis, it is performed as a routine operation to input and store the detected data in a computer, and graphically display the data on a display to understand and analyze the detected result. That is to say, each detector and the computer are connected by a data circuit, and a program for thermal analysis data processing is prepared in a memory of the computer, which has an operational function of performing calculation or statistical processing of various derived data calculated from the detected data, and a function of displaying the obtained various data on a display, and thus, the analysis apparatus is constituted by the whole system including the detection means and the computer.

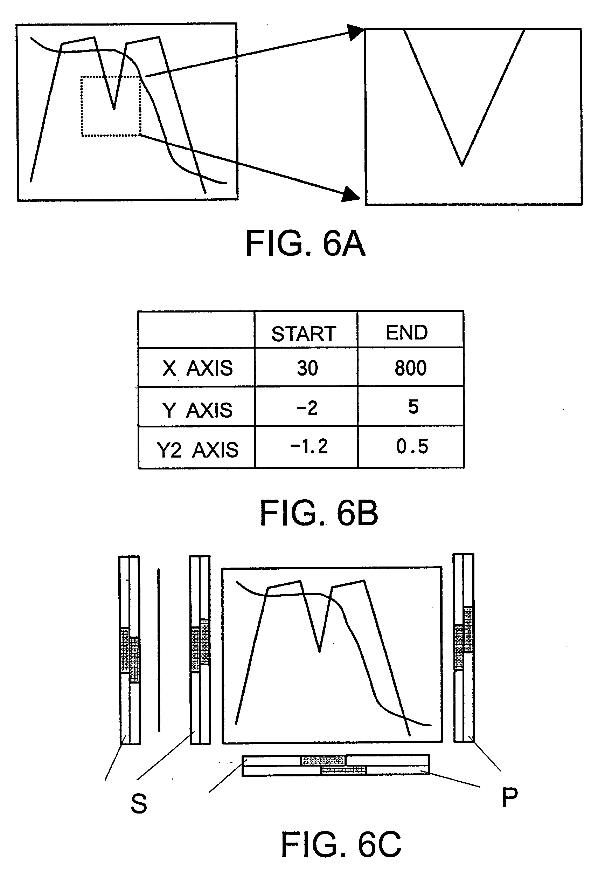

As a graphical display function in such a kind of analysis apparatus, for example, a function of specifying a selected rectangular area to be observed on a screen, as shown in FIG. 6A, by a pointing device such as a mouse, and displaying this area in an enlarged scale is well known, and widely used. In the case of graphical display in the analysis apparatus, however, data obtained corresponding to one variable often becomes plural, and if this selected area enlarging function is used, paying attention to specific data, improper sector display is performed with respect to other data, causing a problem in that the situation cannot be properly ascertained.

Moreover, a plurality of data obtained corresponding to one variable is generally displayed by being overlapped, plotting the variable on the X axis and corresponding data on a plurality of Y axes on the graph. As a method for determining the scale of the axis, there is a method in which the scale is determined by inputting a start value and an end value for each axis. For example, a table as shown in FIG. 6B is displayed, so as to input the start value and the end value for each axis from an input unit such as a keyboard. A defect of this function is that it may not be visualized what shape the waveform takes depending on the data, and in that case, in order to obtain a desired waveform on the screen, input must be repeated many times.

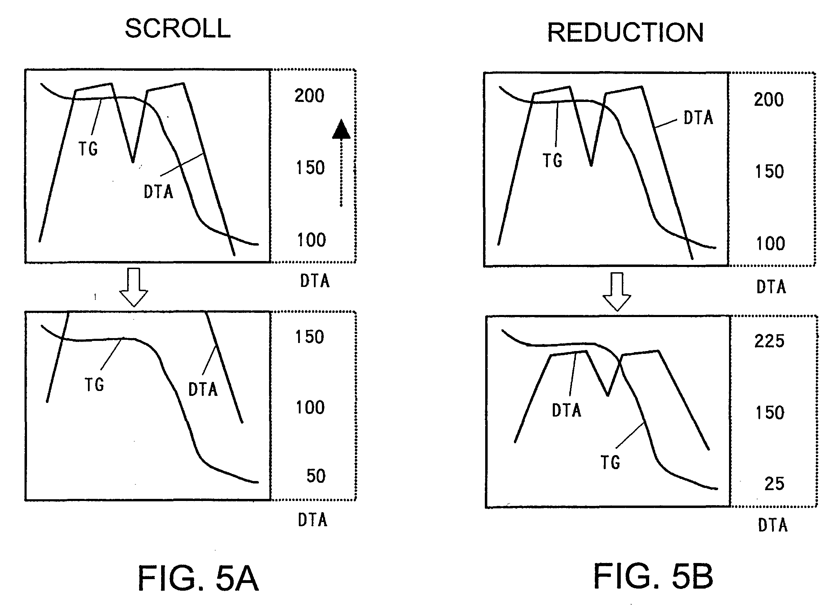

In order to eliminate this troublesome operation, as a function capable of changing a scale for each axis with a simple operation, there has been proposed recently one in which a scroll bar S corresponding to each data type and a scaling bar P as shown in FIG. 6C are displayed, and scrolling and a width change of the scale can be performed by dragging and moving the index by a mouse or the like. That is to say, when the index of the scroll bar S corresponding to the data type to be adjusted is dragged and moved upwards, only a graph of the corresponding data is moved upwards in a parallel direction, as shown in FIG. 5A. Moreover, when the index of the scaling bar P is dragged and moved downwards, only a graph of the corresponding data is displayed in a reduced scale, with the median being fixed, as shown in FIG. 5B. This function of the scroll bar (scaling bar) for continuously adjusting the scale is highly convenient compared to the aforementioned numerical value inputting method, in view of enabling continuous adjustment, while confirming the image on a display. However, since it is necessary to display the scroll bar corresponding to various data, such new problems arise that the essential graphical display screen is narrowed, and that since scroll bars for the Y-axis data and the scaling bar stand close together, it is likely that there will be confusion as to which bar corresponds to which data, and hence misoperation is likely to occur. Also, when an image is copied on paper as a record, scroll bars and scaling bars having no meaning stand close together, which obstructs graphical display. It is possible to select only the graph portion on the screen and print it out, but the screen on the display and the printed image may be shifted from each other, or the aspect ratio of the selected print area may not be matched with that of the screen on the display, thus the operator will become stressed.

It is a object of the present invention to provide a graphical display adjusting system that enables easy continuous adjustment of scaling and scrolled area selection with respect to a graphic image for each data type, while monitoring the displayed image, at the time of graphical display of a plurality of data corresponding to a certain variable, wherein the adjustment means does not affect the graphical display area on the screen.

The graphical display adjusting system of the present invention comprises a function of selecting types of data by specifying a display area of an axis on a screen, a function that when the selected axis is moved while being dragged, a graph of the corresponding data is scrolled with the movement of the axis, and a function that when the wheel of a mouse is rotated in one direction with the axis being specified, the corresponding data is displayed in an enlarged scale, and when the wheel is rotated in the reverse direction, the data is displayed in a reduced scale.

Embodiments of the present invention will now be described by way of further example only and with reference to the accompanying drawings, in which:-
FIG. 1 is a diagram showing the basic construction of a graphical display adjusting system according to the present invention.
FIG. 2 is a diagram showing an example in which data obtained by an analysis apparatus of the present invention is graphically displayed on a display.
FIG. 3 is diagram showing a mouse used in the present invention.
FIG. 4A-4F show change in a graphical display by a specific example, in the case of being edited by the present invention.
FIG. 5A is a diagram for explaining a basic editing operation (scroll) in a graphical display, and FIG 5B is a basic editing operation (reduction) in a graphical display.
FIG. 6A-6C are diagrams for explaining a method of a conventional graphical display adjusting system.

The present invention has been developed for developing a graphical display adjusting system, which solves problems that since it is necessary to display many scroll bars corresponding to data, the essential graphical display screen is narrowed, and that discrimination of scroll bars for many Y axes is likely to cause confusion, thereby causing misoperation, and a problem at the time of copying an image on paper as a record, while ensuring such benefit and convenience that easy continuous adjustment is possible, while confirming the image on the display, which the conventional system has. The conventional system is such that not only are scroll bars corresponding to each axis as shown in FIG. 6C displayed on a display screen, and bars of start value and end value moved using a mouse or the like to continuously adjust the scale, but also scrolling is possible by moving the bars of start value and end value at the same time, while keeping those values . The present inventor has considered realizing the above-described convenient functions of the scroll bars, by providing the function of scroll bars to the representation of each axis, being essential display elements on the graphical image, without displaying images having no relation with the graph, that is, scroll bars, on the screen. That is to say, the graphical display adjusting system of the present invention comprises a function of selecting types of data by specifying a display area of the axis on the screen by a pointing device such as a mouse; and a function that when the selected axis is moved while being dragged, a graph of the corresponding data is scrolled with the movement of the axis, and a function whereby when the wheel of a mouse is rotated in one direction with the axis being specified, the corresponding data is displayed in an enlarged scale, and when the wheel is rotated in the reverse direction, the data is displayed in a reduced scale.

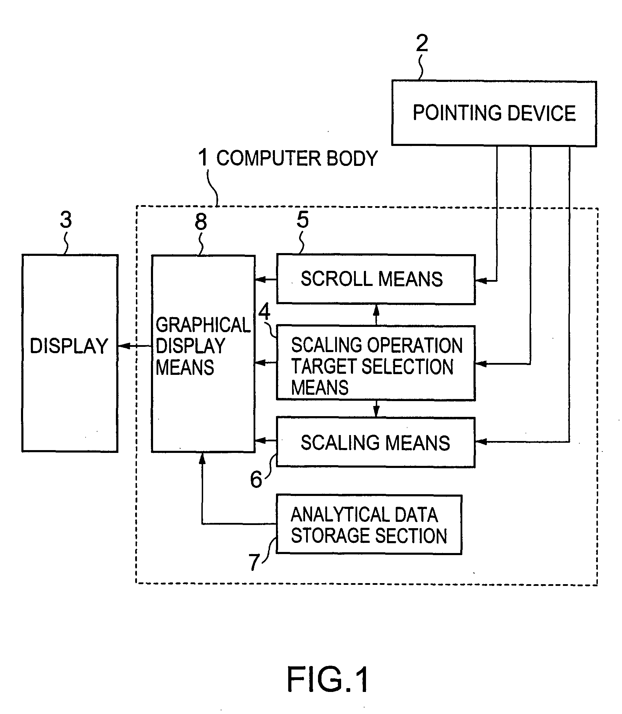

The basic construction of the graphical display adjusting system according to the present invention is shown in FIG. 1. Reference numeral 1 denotes a computer body, 2 denotes a pointing device, and 3 denotes a display. The computer body 1 includes scaling operation target selection means 4, scroll means 5, scaling means 6, an analytical data storage section 7 and graphical display means 8. To the analytical data storage section 7, detection data from a detector externally connected to the computer 1 is input, and derived data based on this data is stored therein. This stored analytical data can be read and graphically displayed on the display 3, in accordance with a program contained in the computer 1. When it is desired to display, in the center of the screen in an enlarged scale, a graphical image of an aimed portion in the displayed screen, the display area of the axis corresponding to the relevant data in the screen is selected by the pointing device 2 such as a mouse, to thereby select the type of data to be adjusted. This function is performed by the scaling operation target selection means 4. At this time, the selected data transmitted from the pointing device 2 is transmitted to the scroll means 5 and the scaling means 6, to thereby activate these means, as well as specifying what is the type of data to be adjusted. Subsequently, when a command signal for moving the image in question so as to come to the center of the screen is sent from the pointing device 2 to the activated scroll means 5, an image signal for moving a graph of the selected type of data to be adjusted in a parallel direction based on the command is generated by the graph display means 8, and transmitted to the display 3 and modified and displayed thereon. Moreover, when a command signal for enlarging the image in question to a desired size on the screen is sent from the pointing device 2 to the activated scaling means 6, an image signal for enlarging the scaling interval based on the command, in the graph of the selected type of data to be adjusted, is generated by the graph display means 8, and transmitted to the display 3 and modified and displayed thereon. In the present invention, even if a command signal is sent from the pointing device 2 to the scroll means 5 and the scaling means 6, based on the signal from the scaling operation target selection means 4, in a state with the scroll means 5 and the scaling means 6 being not activated, the type of data to be adjusted has not been specified, and hence these means do not operate. Also, the type of data to be adjusted need not be one, and in the case of the whole data, the type of data to be adjusted may be selected by specifying all applicable axes, or a plurality of necessary data may be specified and selected. In the case where different parallel movement and scaling rate are specified with respect to individual types of data, operation is performed individually and sequentially for each data type.

### [Embodiments]

The graphical display adjusting system of the present invention will now be described, taking a Thermogravimetry and Differential Thermal Analysis simultaneous measurement apparatus (TG/DTA), which is one type of thermal analysis equipment, as an example. This TG/DTA apparatus is built with Thermogravimetry (TG), being a measurement method having excellent quantitativity in thermal analysis, and a function of differential thermal analysis (DTA) having high generality, and is used for analysis of water content and ash content of a sample, and evaluation of decomposition, oxidation and heat resistance. According to this TG/DTA apparatus, three kinds of physical quantity, that is, temperature, DTA and TG, can be obtained by one sampling. This analysis is for analyzing temperature dependency of physical values of a sample, while changing the temperature of the sample according to a temperature program. In this example, varying physical data (DTA, TG) is obtained, while increasing the temperature from 30°C to 790°C at a rate of 10°C/min. Since the thermal analysis is for seeing the temperature dependency of the sample, it is common to make a graph, by plotting a temperature on the X axis and physical data on the Y axis. Therefore, the DTA value and TG value and DTG obtained by differentiating the TG value are plotted on the Y axes herein. There may be a case where derived data, that is, data obtained by processing the obtained data, is used for analysis, and this DTG is one of the derived data.

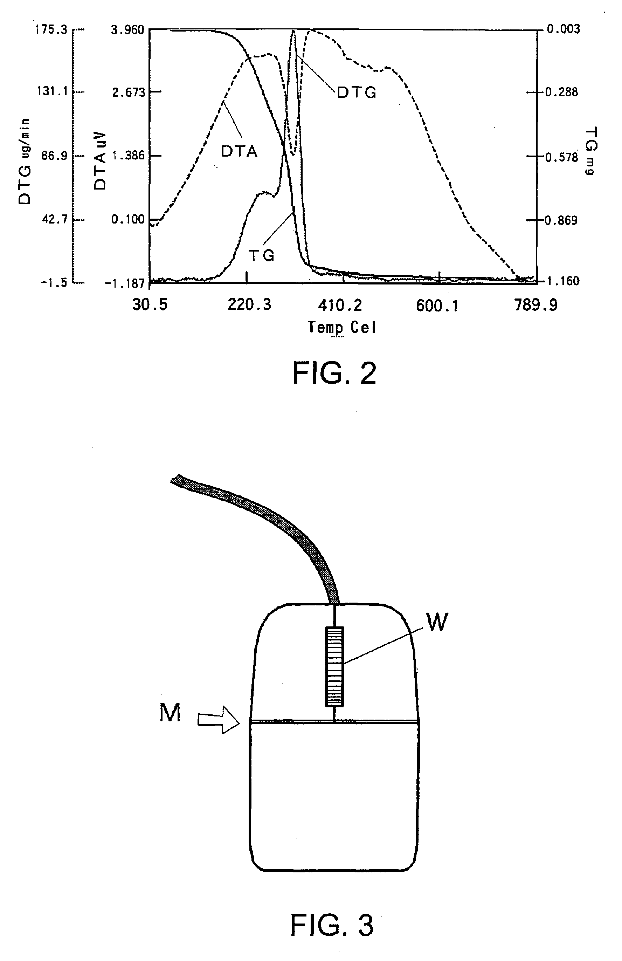

When plotting the DTA value on Y1 axis, the TG value on Y2 axis and the DTG value on Y3 axis, and displaying these on a display, a graph as shown in FIG. 2 is displayed. This representation is displayed in accordance with a program in which a maximum value and a minimum value of each physical quantity are ascertained, and displayed by allocating the full scale of the respective Y axes. When displayed in this manner, it is convenient to carry out analysis, observing the overall trend. However, in the case where a vicinity of a significant point is studied in detail, or an extrapolation temperature obtained by taking a point of intersection of tangent extension lines of a linear portion on the opposite sides of a point of inflection is confirmed, it is not always an optimum image.

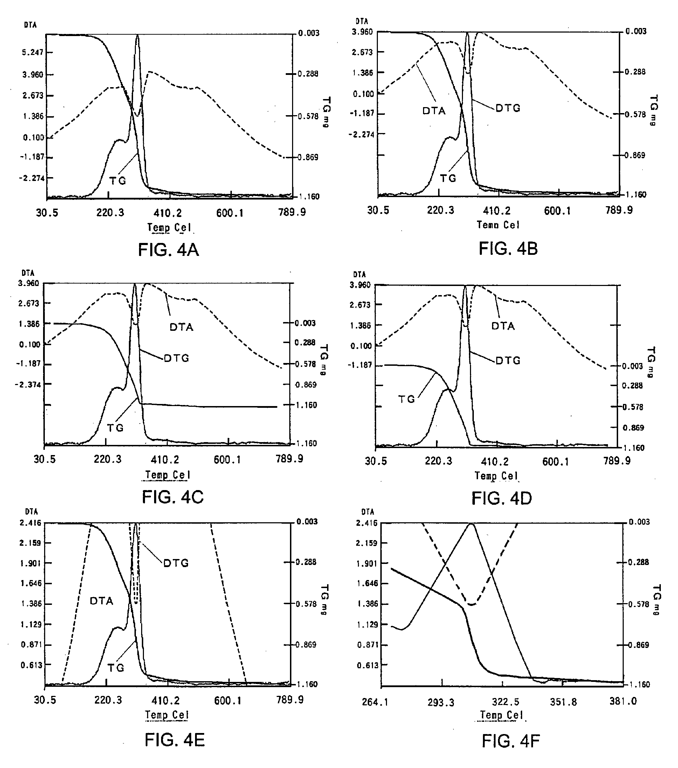

In the graphical screen of FIG. 2, three graphs exist together and are hard to see. Hence, it is assumed here that there is a demand for dividing the DTA value and the TG value into two upper and lower parts for display, and the correspondence by means of the present invention will be described. At first, in order to display the DTA value on the upper half, in the screen shown in FIG. 2, by bringing a point of a mouse to the axial area of the DTA value and clicking the mouse, it is specified that the data, being an object of the scaling operation, is the DTA value. As a result, the scroll means 5 and the scaling means 6 are activated, and the two means are ready for receiving a command from the pointing device 2. In order to display the DTA value on the upper half, unless the scale width in the direction of the Y axis is halved, the whole graph cannot be displayed on the screen, and hence, it is necessary to reduce the scale. Therefore, a wheel W of a mouse M shown in FIG. 3 is rotated rearwards. Then, the scaling means 6 comes in to operation, so that only the DTA value, which is the object of the scaling operation, is displayed in the center of the screen in a half size, as shown in FIG. 4A. In this state, if the point on the axis on the display screen is dragged by the mouse and moved upwards, the activated scroll means 5 comes in to operation, so that the DTA value is moved upwards in a parallel direction, with the movement of the point. As a result, as shown in FIG. 4B, the DTA value is displayed on the upper half of the screen.

Subsequently, in order to display the TG value on the lower half of the screen, in the screen shown in FIG. 4B, by bringing the point of the mouse to the axial area of the TG value, and clicking the mouse, it is specified that the data, being an object of the scaling operation, is the TG value. As a result, the scroll means 5 and the scaling means 6 are activated. In order to display the TG value on the lower half, it is necessary to reduce the scale. Therefore, the wheel W of the mouse M is rotated rearwards. Then, the scaling means 6 comes in to operation, so that only the TG value, which is the object of the scaling operation, is displayed in the center of the screen in a half size, as shown in FIG. 4C. In this state, if the point on the axis on the display screen is dragged by the mouse and moved downwards, the activated scroll means 5 comes in to operation, so that the TG value is moved downwards in a parallel direction, with the movement of the point. As a result, the TG value is displayed on the lower half of the screen, and as shown in FIG. 4D, the DTA value and the TG value can be divided into the upper and lower parts of the screen and displayed. At this time, if the layered display of the DTG value is obstructed, for example, by such an operation as bringing the point of the mouse to the axial area of the DTG value on the display screen, and clicking to thereby specify that the data, being an object of the scaling operation, is the DTG value, and then right-clicking, a temporary elimination command may be issued, so that the DTG value is not displayed on the screen.

Next, it is assumed that there is a demand for enlarging the relative minimum portion of the DTA value for observation on the graphical screen in FIG. 2, and the correspondence by means of the present invention will be described. At first, in the screen shown in FIG. 2, by bringing the point of the mouse to the axial area of the DTA value and clicking the mouse, it is specified that the data, being an object of the scaling operation, is the DTA value, which is the same as in the previous case. As a result, the scroll means 5 and the scaling means 6 are activated, and the both means are ready for receiving a command from the pointing device 2. Since the relevant position of the relative minimum is substantially in the center of the ordinate on the screen, in this case, the scroll operation is not necessary. If this is located in the upper or lower position, it is moved in a parallel direction to the central position on the screen by the scrolling operation. Subsequently, by rotating the wheel W of the mouse M forward, the scaling means 6 comes in to operation, as shown in FIG. 4E, so that only the graph of the DTA value is displayed in an enlarged scale in the up and down direction, with the position of the center on the screen being fixed. The enlargement degree can be adjusted optionally, while monitoring the display screen. However, since this image is enlarged only in the direction of the Y axis, it is not suitable for observation. Therefore, by bringing the point of the mouse to the X-axis area corresponding to the temperature on the screen shown in FIG. 4E, and clicking the mouse, it is specified that the data, being an object of the scaling operation, is a temperature value. Since the aimed position of the X coordinate of the relative minimum leans slightly to the left side, the X axis on the screen is dragged by the mouse to shift it to the right side. Then, the scroll means 5 acts to shift the temperature scale to the right, and with this movement, all the graphs including the DTA value move in a parallel direction to the right. While monitoring the display screen, it is adjusted so that the position of the relative minimum comes to the center in the lateral direction on the screen. In this state, if the wheel W of the mouse M is rotated forwards, the scaling means 6 acts to enlarge and display all the graphs including the DTA value, with the central position on the screen being fixed. The enlargement degree is adjusted optionally, while monitoring the display screen. As a result of the above-described operation, the vicinity of the relative minimum of the DTA to be noted can be displayed in an enlarged scale on the display, as shown in FIG. 4F. In this case, it is also possible to temporarily eliminate the display of unnecessary data, by using the above-described function, according to need.

In addition, on the graphical screen in FIG. 2, it is assumed that there is a demand for observing the situation from the largest change point to a stable point in the TG data, and the correspondence by means of the present invention will be described for this case. In this case, the largest change point in the TG data is a point of temperature where the DTG value shows the peak value, and the stable point is a point of temperature where the DTG value becomes a certain value. Hence, if the range of TG data corresponding to those temperatures is specified on the screen, the relevant area in this case can be ascertained. If the relevant area is ascertained, then, in a similar manner to when the relative minimum portion of the DTA value is enlarged for observation, the relevant area can be displayed in an enlarged scale.

In the above description of the embodiment, the selection operation of the data type, being the object of the scaling operation, is performed by clicking of the mouse, the scroll operation is performed by dragging, and the scaling operation is performed by using the wheel of the mouse. However, these operations may be performed such that, in the case of a mouse, scrolling is performed by the wheel, and scaling is performed by dragging, or it is also possible to use dragging while pushing the [Ctrl] key for an enlarging operation, and dragging other than this is used for the scrolling operation. The important thing is to use an appropriate pointing device so that these operations can be identified, and various designs are possible other than this.

In the present invention, by specifying a display area of an axis on the screen by a pointing device, in the graphical display adjusting system, a function of selecting types of data can be provided. As a result, the type of data in question can be selected without confusion. Moreover, since there are provided such a function that when the selected axis is moved on the screen, while being dragged, a graph of the corresponding data is scrolled with the movement thereof, and such a function that when a wheel of a mouse is rotated in one direction, with the axis being specified, the corresponding data is displayed in an enlarged or reduced scale, desired scaling and scrolled area selection with respect to a graphic image for each data type can be rapidly and easily adjusted, while monitoring the displayed image continuously. Furthermore, since the adjusting means does not require a bar display for adjustment on the screen, as in the related art, a graphic user interface is not required either, and hence a graphical display adjusting system that does not affect the area for graphical display can be provided. When it is desired to print out the analysis result, since there is no unnecessary image such as an adjustment bar, the area selection is not necessary, and hence a graphic image as it is can be directly printed in a specified size.

Further, the operability can be improved, in such a manner that the display area of the axis on the screen for selecting the type of data can be specified by clicking a mouse on the corresponding area, or by bringing the cursor position to the corresponding area.

In the case where a function of selecting the type of data by specifying a display area of an axis on the screen by the pointing device, and a function of temporarily eliminating unnecessary type of data from the screen by issuing a temporary elimination command, with the axis being specified, are provided, only the information necessary for the phenomenon in question can be graphically displayed, and hence an easily understandable clear graphic image can be obtained.

## Claims

1. A graphical display adjusting system comprising: means for selecting types of data which is an object of a scaling operation by specifying a display area of an axis on a screen by a pointing device; and means for scrolling a graph of the type of data by another operation of the pointing device with the axis being specified.

2. A graphical display adjusting system comprising: means for selecting types of data which is an object of a scaling operation by specifying a display area of an axis on a screen by a pointing device; and means for displaying a graph of the type of data in an enlarged or reduced scale by another operation of the pointing device with the axis being specified.

3. A graphical display adjusting system comprising: means for selecting types of data which is an object of the scaling operation by the first operation which specifies a display area of an axis on a screen by a pointing device; means for scrolling a graph of the type of data by the second operation of the pointing device with the axis being specified; and means for displaying a graph of the type of data in an enlarged or reduced scale by the third operation of the pointing device with the axis being specified.

4. A graphical display adjusting system according to claim 1, wherein the operation of the pointing device for performing scrolling of data is performed by dragging on the axis display area on the screen.

5. A graphical display adjusting system according to claim 2, wherein the operation of the pointing device for performing scrolling of data is performed by dragging on the axis display area on the screen.

6. A graphical display adjusting system according to claim 1, wherein the operation of the pointing device for performing enlarged display or reduced display of the data is performed by rotating a wheel.

7. A graphical display adjusting system according to claim 2, wherein the operation of the pointing device for performing enlarged display or reduced display of the data is performed by rotating a wheel.

8. A graphical display adjusting system according to claim 1, wherein specification of the display area of the axis on the screen where the type of data is selected is performed by clicking a mouse.

9. A graphical display adjusting system according to claim 2, wherein specification of the display area of the axis on the screen where the type of data is selected is performed by clicking a mouse.

10. A graphical display adjusting system according to claim 1, wherein the display area of the axis on the screen where the type of data is selected is specified by bringing the cursor position to the area.

11. A graphical display adjusting system according to claim 2, wherein the display area of the axis on the screen where the type of data is selected is specified by bringing the cursor position to the area.

12. A graphical display adjusting system comprising: means for selecting types of data by specifying a display area of an axis on a screen by a pointing device; and means for temporarily eliminating a graph of an unnecessary type of data from the screen by issuing a temporary elimination command with the axis being specified.
